(19) Europäisches Patentamt
European Patent Office
Office européen des brevets

(11) **EP 4 749 968 A1**

(12) **EUROPEAN PATENT APPLICATION**
published in accordance with Art. 153(4) EPC

(43) Date of publication:
**27.05.2026 Bulletin 2026/22**

(21) Application number: **24853635.1**

(22) Date of filing: **07.08.2024**

(51) International Patent Classification (IPC):
***H04L 5/00*** (2006.01)

(52) Cooperative Patent Classification (CPC):
**H04L 5/00**

(86) International application number:
**PCT/CN2024/110443**

(87) International publication number:
**WO 2025/036224 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 CN 202311036741**

(71) Applicant: **HUAWEI TECHNOLOGIES CO., LTD.
Shenzhen 518129 (CN)**

(72) Inventors:
• **GAO, Junhui
Shenzhen, Guangdong 518129 (CN)**
• **WANG, Xiaohan
Shenzhen, Guangdong 518129 (CN)**
• **JIN, Huangping
Shenzhen, Guangdong 518129 (CN)**

(74) Representative: **Gill Jennings & Every LLP
The Broadgate Tower
20 Primrose Street
London EC2A 2ES (GB)**

(54) **METHOD FOR INDICATING REFERENCE SIGNAL, AND COMMUNICATION APPARATUS AND COMMUNICATION SYSTEM**

(57) This application provides a method for indicating a reference signal, a communication apparatus, and a communication system. In the method, a terminal device receives first indication information, where the first indication information includes port information of a first DMRS; and the terminal device determines CSI-RS port information of the terminal device based on the first indication information. Therefore, a network device does not need to send, to the terminal device, separate indication information indicating a CSI-RS port of the terminal device. Therefore, signaling overheads are reduced, to help save air interface resources.

FIG. 2

**Description**

CROSS-REFERENCE TO RELATED APPLICATIONS

This application claims priority to Chinese Patent Application No. 202311036741.0, filed with the China National Intellectual Property Administration on August 16, 2023 and entitled "METHOD FOR INDICATING REFERENCE SIGNAL, COMMUNICATION APPARATUS, AND COMMUNICATION SYSTEM", which is incorporated herein by reference in its entirety.

TECHNICAL FIELD

This application relates to the field of communication technologies, and in particular, to a method for indicating a reference signal, a communication apparatus, and a communication system.

BACKGROUND

Compared with a conventional mobile communication system, a 5th generation (5th generation, 5G) mobile communication system and a future wireless communication system are dedicated to supporting higher system performance, and support a plurality of service types, a wide deployment scenario, and a wider spectrum range. This causes more air interface signaling between a terminal device and a network device, resulting in straining air interface resources.
How to reduce overheads of air interface signaling, for example, reduce overheads of signaling indicating a reference signal, needs to be resolved.

SUMMARY

Embodiments of this application provide a method for indicating a reference signal, a communication apparatus, and a communication system, to reduce overheads of air interface signaling.
According to a first aspect, an embodiment of this application provides a method for indicating a reference signal. The method may be performed by a terminal device or a module (for example, a chip) in the terminal device. The method includes: receiving first indication information, where the first indication information indicates and includes port information of a first demodulation reference signal (demodulation reference signal, DMRS); and determining port information of a first channel state information reference signal (channel state information reference signal, CSI-RS) based on the first indication information.
In the foregoing solution, there is a mapping relationship or a correspondence between the first indication information and CSI-RS port information of the terminal device, and the terminal device may determine the CSI-RS port information of the terminal device based on the first indication information. Therefore, a network device does not need to send, to the terminal device, separate indication information indicating a port of a CSI-RS of the terminal device, but determines the port information of the first CSI-RS by using the first indication information that originally needs to be sent and that indicates a port of the first DMRS. In other words, the first indication information and the port information of the first CSI-RS originally need to be sent. However, in the solution, only the first indication information needs to be sent. Therefore, signaling overheads are reduced, to help save air interface resources. In addition, in the solution, the terminal device determines the port information of the first CSI-RS based on the first indication information, instead of indicating, by the network device, the port information of the first CSI-RS by using air interface signaling, so that the port information of the first CSI-RS can be quickly determined. This is because time for which the terminal device determines the port information of the first CSI-RS based on the first indication information is shorter than time for receiving the air interface signaling and obtaining the port information of the first CSI-RS by parsing the air interface signaling.
In a possible implementation, the first indication information includes a port index of the first DMRS, and the port information of the first CSI-RS includes a port index of the first CSI-RS.
In a possible implementation, the port index of the first CSI-RS is the same as the port index of the first DMRS.
In a possible implementation, the determining the port information of the first CSI-RS based on the first indication information includes: determining the port information of the first CSI-RS corresponding to the first indication information based on the first indication information and a first mapping relationship predefined in a protocol, where the first mapping relationship includes a mapping relationship between DMRS port information and CSI-RS port information, the DMRS port information includes the port information of the first DMRS, and the CSI-RS port information includes the port information of the first CSI-RS.
In the foregoing solution, the terminal device may determine, based on the first mapping relationship predefined in the protocol, the port information of the first CSI-RS corresponding to the first indication information, so that the port information of the first CSI-RS can be accurately and quickly determined.

In a possible implementation, the method further includes: receiving second indication information, where the second indication information includes a second mapping relationship between the first indication information and the port information of the first CSI-RS; and the determining the port information of the first CSI-RS based on the first indication information includes: determining the port information of the first CSI-RS based on the first indication information and the second mapping relationship.

In the foregoing solution, the network device indicates, to the terminal device, the second mapping relationship between the first indication information and the port information of the first CSI-RS, to help the terminal device accurately determine the port information of the first CSI-RS.

In a possible implementation, the method further includes: receiving a second CSI-RS; and determining the first CSI-RS in the second CSI-RS based on the first indication information.

In a possible implementation, the method further includes: receiving a first message, where the first message includes configuration information of a third CSI-RS, and the second CSI-RS is a part of the third CSI-RS.

In the foregoing solution, a CSI-RS configuration, that is, the configuration information of the third CSI-RS, is configured for the terminal device by using the first message. A port number of the second CSI-RS actually sent by the network device may be less than a port number of the actually configured third CSI-RS, so that the CSI-RS can be flexibly sent. In addition, because the CSI-RS does not need to be sent on all configured ports of the CSI-RS (that is, ports of the third CSI-RS) each time, but the CSI-RS is sent according to an actual requirement (in other words, the second CSI-RS is actually sent), overheads can be reduced.

In a possible implementation, the method further includes: receiving a first message, where the first message includes a plurality of pieces of configuration information; and the receiving the second CSI-RS includes: receiving the second CSI-RS based on configuration information of a fourth CSI-RS in the plurality of pieces of configuration information, where the second CSI-RS is a part of the fourth CSI-RS.

In the foregoing solution, a plurality of CSI-RS configurations are configured for the terminal device by using the first message. During actual sending, one CSI-RS configuration may be selected in the plurality of CSI-RS configurations to send the CSI-RS, so that the CSI-RS can be flexibly sent. In addition, because the CSI-RS do not need to be sent on all configured ports of the CSI-RS (that is, ports of the fourth CSI-RS) each time, but the CSI-RS is sent according to an actual requirement (in other words, the second CSI-RS is actually sent), overheads can be reduced.

In a possible implementation, the method further includes: receiving third indication information, where the third indication information includes the configuration information of the fourth CSI-RS in the plurality of pieces of CSI-RS configuration information.

In the foregoing solution, the network device indicates the selected configuration information of the fourth CSI-RS to the terminal device, so that a CSI-RS configuration can be accurately determined.

In a possible implementation, the method further includes: determining the configuration information of the fourth CSI-RS based on DMRS configuration information, where the configuration information of the fourth CSI-RS is associated with the DMRS configuration information, and the DMRS configuration information includes at least one of the following information: a DMRS type, a maximum number of DMRS symbols, a number of front-loaded DMRS symbols, or a number of DMRS CDM groups.

In the foregoing solution, the terminal device determines the configuration information of the fourth CSI-RS in the plurality of pieces of CSI-RS configuration information based on the DMRS configuration information, so that a CSI-RS configuration can be accurately determined. In addition, no additional indication information is needed, thereby reducing signaling overheads.

In a possible implementation, the determining the configuration information of the fourth CSI-RS based on the DMRS configuration information includes: determining a maximum number of DMRS ports based on the DMRS configuration information; and determining the configuration information of the fourth CSI-RS based on the maximum number of DMRS ports, where a port number of the fourth CSI-RS is a smallest value in a CSI-RS port number set, each CSI-RS port number in the CSI-RS port number set is included in numbers of CSI-RS ports indicated by all of the plurality of pieces of CSI-RS configuration information, and each CSI-RS port number in the CSI-RS port number set is greater than or equal to the maximum number of DMRS ports.

In a possible implementation, the method further includes: the maximum number of DMRS symbols is equal to 1, and the maximum number of DMRS ports is equal to a product of a and the number of DMRS CDM groups; or the maximum number of DMRS symbols is equal to 2, and the maximum number of DMRS ports is equal to a product of a, the number of DMRS CDM groups, and the number of front-loaded DMRS symbols, where a is related to the DMRS type.

In a possible implementation, the DMRS type is a type 1 or a type 2, and a is equal to 2; or the DMRS type is an enhanced type 1 or an enhanced type 2, and a is equal to 4.

In a possible implementation, the method further includes: receiving fourth indication information, where the fourth indication information includes the DMRS configuration information, or the first indication information and the fourth indication information indicate the DMRS configuration information.

In a possible implementation, the plurality of pieces of CSI-RS configuration information further include configuration information of a fifth CSI-RS, and a port number of the fifth CSI-RS is different from the port number of the fourth CSI-RS.

In a possible implementation, the method further includes: determining uplink precoding based on the port information of the first CSI-RS.

According to a second aspect, an embodiment of this application provides a method for indicating a reference signal. The method may be performed by a terminal device or a module (for example, a chip) in the terminal device. The method includes: receiving a first message, where the first message includes configuration information of a third CSI-RS; and receiving a second CSI-RS, where the second CSI-RS is a part of the third CSI-RS.

In the foregoing solution, a CSI-RS configuration, that is, the configuration information of the third CSI-RS, is configured for the terminal device by using the first message. A port number of the second CSI-RS actually sent by a network device may be less than a port number of the actually configured third CSI-RS, so that the CSI-RS can be flexibly sent. In addition, because the CSI-RS does not need to be sent on all configured ports of the CSI-RS (that is, ports of the third CSI-RS) each time, but the CSI-RS is sent according to an actual requirement (in other words, the second CSI-RS is actually sent), overheads can be reduced.

According to a third aspect, an embodiment of this application provides a method for indicating a reference signal. The method may be performed by a terminal device or a module (for example, a chip) in the terminal device. The method includes: receiving a first message, where the first message includes a plurality of pieces of CSI-RS configuration information; and receiving a second CSI-RS based on configuration information of a fourth CSI-RS in the plurality of pieces of CSI-RS configuration information, where the second CSI-RS is a part of the fourth CSI-RS.

In the foregoing solution, a plurality of CSI-RS configurations are configured for the terminal device by using the first message. During actual sending, one CSI-RS configuration may be selected in the plurality of CSI-RS configurations to send the CSI-RS, so that the CSI-RS can be flexibly sent. In addition, because the CSI-RS do not need to be sent on all configured ports of the CSI-RS (that is, ports of the fourth CSI-RS) each time, but the CSI-RS is sent according to an actual requirement (in other words, the second CSI-RS is actually sent), overheads can be reduced.

In a possible implementation, the method further includes: receiving third indication information, where the third indication information includes the configuration information of the fourth CSI-RS in the plurality of pieces of CSI-RS configuration information.

In a possible implementation, fourth indication information is received, where the fourth indication information includes DMRS configuration information, or the fourth indication information and the first indication information indicate the DMRS configuration information; the DMRS configuration information is associated with the configuration information of the fourth CSI-RS; and the DMRS configuration information includes at least one of the following information: a DMRS type, a maximum number of DMRS symbols, a number of front-loaded DMRS symbols, or a number of DMRS CDM groups.

According to a fourth aspect, an embodiment of this application provides a method for indicating a reference signal. The method may be performed by a network device or a module (for example, a chip) in the network device. The method includes: determining first indication information, where the first indication information includes port information of a first DMRS, and the port information of the first DMRS is for determining port information of a first CSI-RS; and sending the first indication information.

In a possible implementation, the first indication information includes a port index of the first DMRS, and the port information of the first CSI-RS includes a port index of the first CSI-RS.

In a possible implementation, the port index of the first CSI-RS is the same as the port index of the first DMRS.

In a possible implementation, a first mapping relationship between DMRS port information and CSI-RS port information is predefined in a protocol, the DMRS port information includes the port information of the first DMRS, and the CSI-RS port information includes the port information of the first CSI-RS.

In the foregoing solution, the terminal device may determine, based on the first mapping relationship predefined in the protocol, the port information of the first CSI-RS corresponding to the first indication information, so that the port information of the first CSI-RS can be accurately and quickly determined.

In a possible implementation, the method further includes: sending second indication information, where the second indication information includes a second mapping relationship between the first indication information and the port information of the first CSI-RS.

In the foregoing solution, the network device indicates, to the terminal device, the second mapping relationship between the first indication information and the port information of the first CSI-RS, to help the terminal device accurately determine the port information of the first CSI-RS.

In a possible implementation, the method further includes: sending a first message, where the first message includes configuration information of a third CSI-RS; and sending a second CSI-RS, where the second CSI-RS is a part of the third CSI-RS, and the second CSI-RS includes the first CSI-RS.

In a possible implementation, the method further includes: sending a first message, where the first message includes a plurality of pieces of CSI-RS configuration information; sending third indication information, where the third indication information includes configuration information of a fourth CSI-RS in the plurality of pieces of CSI-RS configuration information; and sending a second CSI-RS, where the second CSI-RS is a part of the fourth CSI-RS.

In a possible implementation, the method further includes: sending a first message, where the first message includes a plurality of pieces of CSI-RS configuration information; sending fourth indication information, where the fourth indication information includes DMRS configuration information, or the first indication information and the fourth indication information indicate the DMRS configuration information; the DMRS configuration information is associated with configuration information of a fourth CSI-RS in the plurality of pieces of CSI-RS configuration information; and the DMRS configuration information includes at least one of the following information: a DMRS type, a maximum number of DMRS symbols, a number of front-loaded DMRS symbols, or a number of DMRS CDM groups; and sending a second CSI-RS, where the second CSI-RS is a part of the fourth CSI-RS.

In a possible implementation, a port number of the fourth CSI-RS is a smallest value in a CSI-RS port number set, each CSI-RS port number in the CSI-RS port number set is included in numbers of CSI-RS ports indicated by all of the plurality of pieces of CSI-RS configuration information, each CSI-RS port number in the CSI-RS port number set is greater than or equal to a maximum number of DMRS ports, and the maximum number of DMRS ports is associated with the DMRS configuration information.

In a possible implementation, the method further includes: the maximum number of DMRS symbols is equal to 1, and the maximum number of DMRS ports is equal to a product of a and the number of DMRS CDM groups; or the maximum number of DMRS symbols is equal to 2, and the maximum number of DMRS ports is equal to a product of a, the number of DMRS CDM groups, and the number of front-loaded DMRS symbols, where a is related to the DMRS type.

In a possible implementation, the DMRS type is a type 1 or a type 2, and a is equal to 2; or the DMRS type is an enhanced type 1 or an enhanced type 2, and a is equal to 4.

In a possible implementation, the plurality of pieces of CSI-RS configuration information further include configuration information of a fifth CSI-RS, and a port number of the fifth CSI-RS is different from the port number of the fourth CSI-RS.

According to a fifth aspect, an embodiment of this application provides a method for indicating a reference signal. The method may be performed by a network device or a module (for example, a chip) in the network device. The method includes: sending a first message, where the first message includes configuration information of a third CSI-RS; and sending a second CSI-RS, where the second CSI-RS is a part of the third CSI-RS.

According to a sixth aspect, an embodiment of this application provides a method for indicating a reference signal. The method may be performed by a network device or a module (for example, a chip) in the network device. The method includes: sending a first message, where the first message includes a plurality of pieces of CSI-RS configuration information; sending third indication information, where the third indication information includes configuration information of a fourth CSI-RS in the plurality of pieces of CSI-RS configuration information; and sending a second CSI-RS, where the second CSI-RS is a part of the fourth CSI-RS.

According to a seventh aspect, an embodiment of this application provides a method for indicating a reference signal. The method may be performed by a network device or a module (for example, a chip) in the network device. The method includes: sending a first message, where the first message includes a plurality of pieces of CSI-RS configuration information; sending fourth indication information, where the fourth indication information includes DMRS configuration information, the DMRS configuration information is associated with configuration information of a fourth CSI-RS in the plurality of pieces of CSI-RS configuration information, and the DMRS configuration information includes at least one of the following information: a DMRS type, a maximum number of DMRS symbols, a number of front-loaded DMRS symbols, or a number of DMRS CDM groups; and sending a second CSI-RS, where the second CSI-RS is a part of the fourth CSI-RS.

For technical effects of the claims of the network device, refer to the technical effects of the claims of a terminal device side. Details are not described again.

According to an eighth aspect, an embodiment of this application provides a communication apparatus. The apparatus may be a terminal device, or may be a module (for example, a chip) in the terminal device. The apparatus has a function of implementing the method in any one of the foregoing implementations of the first aspect to the third aspect. The function may be implemented by hardware, or may be implemented by hardware executing corresponding software. The hardware or the software includes one or more modules corresponding to the foregoing function.

According to a ninth aspect, an embodiment of this application provides a communication apparatus. The apparatus may be a network device, or may be a module (for example, a chip) in the network device. The apparatus has a function of implementing the method in any one of the foregoing implementations of the fourth aspect to the seventh aspect. The function may be implemented by hardware, or may be implemented by hardware executing corresponding software. The hardware or the software includes one or more modules corresponding to the foregoing function.

According to a tenth aspect, an embodiment of this application provides a communication apparatus, including units or means configured to perform steps in any one of the foregoing implementations of the first aspect to the seventh aspect.

According to an eleventh aspect, an embodiment of this application provides a communication apparatus, including a processor and an interface circuit. The processor is configured to communicate with another apparatus through the interface circuit, and perform any one of the foregoing implementations of the first aspect to the seventh aspect. There are one or more processors.

According to a twelfth aspect, an embodiment of this application provides a communication apparatus, including a processor. The processor is configured to invoke a program to perform any one of the foregoing implementations of the first aspect to the seventh aspect. In addition, there may be one or more processors.

Optionally, the communication apparatus may further include a memory. The memory is coupled to the processor. The memory may be located inside the apparatus, or may be located outside the apparatus.

According to a thirteenth aspect, an embodiment of this application provides a communication apparatus, including a processor. When the apparatus runs, the processor executes computer instructions, to cause the apparatus to perform any one of the foregoing implementations of the first aspect to the seventh aspect.

Optionally, the communication apparatus may further include a memory, and the memory is configured to store the computer instructions.

According to a fourteenth aspect, an embodiment of this application further provides a computer program product. The computer program product includes a computer program or instructions. The computer program or instructions, when executed by a communication apparatus, cause any one of the foregoing implementations of the first aspect to the seventh aspect to be performed.

According to a fifteenth aspect, an embodiment of this application further provides a computer-readable storage medium. The computer-readable storage medium stores instructions. The instructions, when run on a communication apparatus, cause any one of the foregoing implementations of the first aspect to the seventh aspect to be performed.

According to a sixteenth aspect, an embodiment of this application further provides a chip system, including a processor, configured to perform any one of the foregoing implementations of the first aspect to the sixth aspect.

According to a seventeenth aspect, an embodiment of this application further provides a communication system, including a terminal device configured to perform any one of the foregoing implementations of the first aspect, and a network device configured to perform any one of the foregoing implementations of the fourth aspect.

According to an eighteenth aspect, an embodiment of this application further provides a communication system, including a terminal device configured to perform any one of the foregoing implementations of the second aspect, and a network device configured to perform any one of the foregoing implementations of the fifth aspect.

According to a nineteenth aspect, an embodiment of this application further provides a communication system, including a terminal device configured to implement in third aspect, and a network device configured to implement any one of the foregoing implementations of the sixth aspect or the seventh aspect.

BRIEF DESCRIPTION OF DRAWINGS

FIG. 1(a) is a diagram of an architecture of a communication system to which an embodiment of this application is applicable;
FIG. 1(b) is a diagram of a network device;
FIG. 2 is a schematic flowchart of a method for indicating a reference signal according to an embodiment of this application;
FIG. 3 is a schematic flowchart of a method for sending a CSI-RS according to an embodiment of this application;
FIG. 4 is a diagram of a structure of a communication apparatus according to an embodiment of this application; and
FIG. 5 is a diagram of a structure of a communication apparatus according to an embodiment of this application.

DESCRIPTION OF EMBODIMENTS

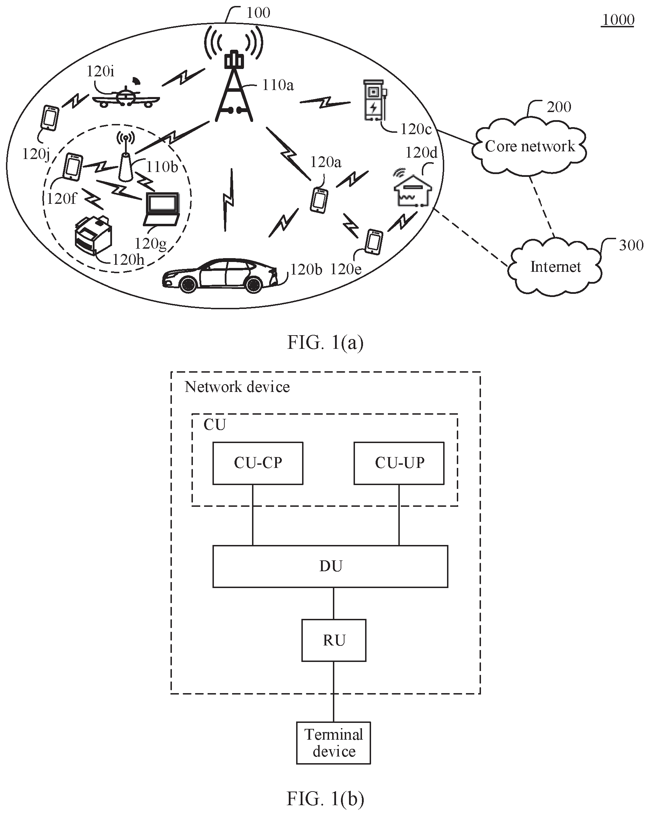

FIG. 1(a) is a diagram of an architecture of a communication system to which an embodiment of this application is applicable. A communication system 1000 shown in FIG. 1(a) includes a radio access network 100 and a core network 200. Optionally, the communication system 1000 further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other, functions of the core network device and logical functions of the network device may be integrated into a same physical device, or a part of functions of the core network device and a part of functions of the network device may be integrated into one physical device. Terminal devices may be connected to each other and network devices may be connected to each other in a wired or wireless manner. FIG.

1(a) is only a diagram. The communication system may further include other network devices, for example, a wireless relay device and a wireless backhaul device, which are not shown in FIG. 1(a).

The network device is an access device used by the terminal device to access the communication system in a wired or wireless manner. The network device may be a base station (base station), an evolved nodeB (evolved NodeB, eNodeB), a transmission reception point (transmission reception point, TRP), a next generation nodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a function of a part or all of physical layers. For specific descriptions of the foregoing protocol layers, refer to technical specifications related to the 3rd generation partnership project (3rd generation partnership project, 3GPP). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device having a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer having a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed positions, or may be movable. The network device and the terminal device may be deployed on land, including indoor devices, outdoor devices, handheld devices, or vehicle-mounted devices; may be deployed on water; or may be deployed on an airplane, a balloon, and a man-made satellite. Application scenarios of the network device and the terminal device are not limited in embodiments of this application.

Roles of the network device and the terminal device may be relative. For example, a helicopter or an unmanned aerial vehicle 120i in FIG. 1(a) may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between the network devices. In this case, compared with 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication may be performed between the network device and the terminal device, between network devices, or between terminal devices by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In this embodiment of this application, the function of the network device may alternatively be performed by a module (for example, a chip) in the network device, or may be performed by a control subsystem having the function of the network device. The control subsystem having the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus having the function of the terminal device.

In this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device.

FIG. 1(b) is a diagram of a network device. As shown in FIG. 1(b), the network device includes one CU, one or more DUs, and one or more radio units (radio units, RUs). For clarity, FIG. 1(b) shows only one CU, one DU, and one RU. The CU is configured to connect to a core network and the one or more DUs. Optionally, the CU may have a part of functions of the core network. The CU may include a CU-control plane (control plane, CP) and a CU-user plane (user plane, UP).

The CU and the DU may be configured based on a function of a protocol layer of a wireless network implemented by the CU and the DU. For example, the CU is configured to implement functions of a PDCP layer and a protocol layer above the PDCP layer (for example, a radio resource control (radio resource control, RRC) layer and/or an SDAP layer), and the DU is configured to implement a function of a protocol layer below the PDCP layer (for example, a radio link control (radio link control, RLC) layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configurations of the CU and the DU are merely examples. Alternatively, functions of the CU and the DU may be configured as needed. For example, the CU or the DU may be configured to have functions of more protocol layers, or the CU or the DU may be configured to have a part of processing functions of protocol layers. For example, some functions of the RLC layer and a function of a protocol layer above the RLC layer are set on the CU, and remaining functions of the RLC layer and a function of a protocol layer below the RLC layer are set on the DU. For another example, division into functions of the CU or the DU may be performed based on service types or other system requirements. For example, division may be performed based on a delay. Functions whose processing time needs to meet a requirement for a small delay are set on the DU, and functions whose processing time does not need to meet the requirement for the delay are set on the CU.

The DU and the RU may work together to implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include some functions of the physical layer, and the part of the function are closer to the MAC layer. The lower-layer function of the physical layer may include some other functions of the physical layer, and the some other functions are closer to an intermediate radio frequency side.

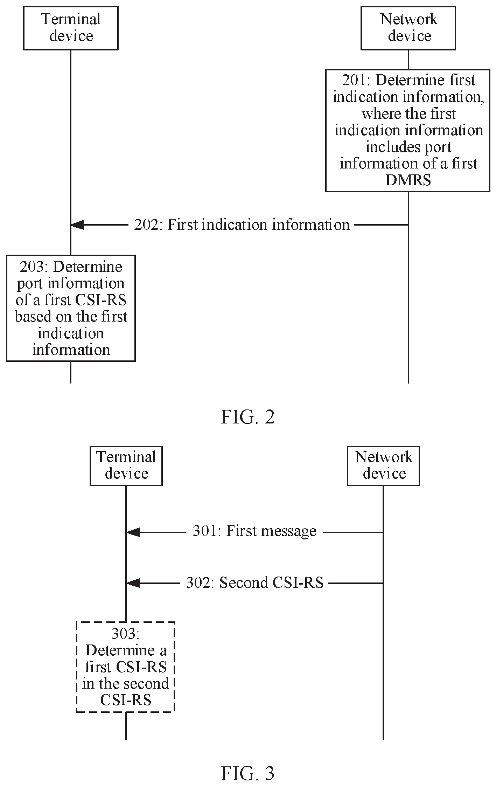

FIG. 2 is a schematic flowchart of a method for indicating a reference signal according to an embodiment of this application. The method is performed by a network device or a module (for example, a chip) in the network device, and a terminal device or a module (for example, a chip) in the terminal device. The following provides descriptions by using an example in which the terminal device and the network device perform the method. The method includes the following steps.

Step 201: The network device determines first indication information.

The first indication information includes port information of a first demodulation reference signal (demodulation reference signal, DMRS). The first indication information may also be referred to as the port information of the first DMRS. The first DMRS is a DMRS related to one terminal device, and the first DMRS includes one or more DMRSs corresponding to one or more DMRS ports.

The port information of the first DMRS may include a port index, a port identifier (ID), or another information that can indicate a port, for example, a number of front-loaded DMRS symbols or a number of DMRS code division multiplexing (code division multiplexing, CDM) groups.

For example, the port information of the first DMRS may be port information of a DMRS on a physical uplink shared channel (physical uplink shared channel, PUSCH).

Step 202: The network device sends the first indication information to the terminal device. Correspondingly, the terminal device receives the first indication information.

For example, the first indication information is carried in downlink control information (downlink control information, DCI).

Step 203: The terminal device determines port information of a first CSI-RS based on the first indication information.

That the terminal device determines the port information of the first CSI-RS based on the first indication information may alternatively be understood as that the terminal device determines the port information of the first channel state information reference signal (channel state information reference signal, CSI-RS) based on the port information of the first DMRS. The first CSI-RS includes one or more CSI-RSs corresponding to one or more CSI-RS ports. The port information of the first CSI-RS may include a port index, a port identifier (ID), or another information that can indicate a port, for example, a type of CDM group.

In the foregoing solution, there is a mapping relationship or a correspondence between the first indication information and CSI-RS port information of the terminal device, and the terminal device may determine the CSI-RS port information of the terminal device based on the first indication information. Therefore, the network device does not need to send, to the terminal device, separate indication information indicating a port of a CSI-RS of the terminal device, but determines the port information of the first CSI-RS by using the first indication information that originally needs to be sent and that indicates a port of the first DMRS. In other words, the first indication information and the port information of the first CSI-RS originally need to be sent. However, in the solution, only the first indication information needs to be sent. Therefore, signaling overheads are reduced, to help save air interface resources. In addition, in the solution, the terminal device determines the port information of the first CSI-RS based on the first indication information, instead of indicating, by the network device, the port information of the first CSI-RS by using air interface signaling, so that the port information of the first CSI-RS can be quickly determined. This is because time for which the terminal device determines the port information of the first CSI-RS based on the first indication information is shorter than time for receiving the air interface signaling and obtaining the port information of the first CSI-RS by parsing the air interface signaling.

For example, the first indication information includes a DMRS port index 1, a DMRS port index 2, and a DMRS port index 3, and the terminal device determines, based on the first indication information, that CSI-RS port indexes of the terminal device include a CSI-RS port index 1, a CSI-RS port index 2, and a CSI-RS port index 3. The CSI-RS port index 1 corresponds to the DMRS port index 1, the CSI-RS port index 2 corresponds to the DMRS port index 2, and the CSI-RS port index 3 corresponds to the DMRS port index 3.

In an implementation, a first mapping relationship (which may also be referred to as a first correspondence) between DMRS port information of the terminal device and CSI-RS port information of the terminal device is predefined in a protocol. For example, a first mapping relationship between a DMRS port index and a CSI-RS port index is predefined in the protocol. The first mapping relationship may be a function relationship, for example, a hash function or a linear function. The DMRS port index may be the same as or different from the corresponding CSI-RS port index. For example, DMRS port indexes of the terminal device include 1001, 1002, and 1003, CSI-RS port indexes of the terminal device include 3001, 3002, and 3003, the DMRS port index 1001 of the terminal device corresponds to the CSI-RS port index 3001 of the terminal device, the DMRS port index 1002 of the terminal device corresponds to the CSI-RS port index 3002 of the terminal device, and the DMRS port index 1003 of the terminal device corresponds to the CSI-RS port index 3003 of the terminal device. For another example, DMRS port indexes of the terminal device include 1001, 1002, and 1003, CSI-RS port indexes of the terminal device include 1001, 1002, and 1003, the DMRS port index 1001 of the terminal device corresponds to the CSI-RS port index 1001 of the terminal device, the DMRS port index 1002 of the terminal device corresponds to the CSI-RS port index 1002 of the terminal device, and the DMRS port index 1003 of the terminal device corresponds to the CSI-RS port index 1003 of the terminal device.

Correspondingly, step 203 may be: The terminal device determines, based on the first indication information, the port information of the first CSI-RS corresponding to the first indication information from the first mapping relationship predefined in the protocol.

In still another implementation, before step 201, the network device further sends second indication information to the terminal device. The second indication information includes a second mapping relationship between the first indication information and the port information of the first CSI-RS. Correspondingly, step 203 may be: The terminal device determines the port information of the first CSI-RS based on the first indication information and the second mapping relationship. A specific implementation of the second mapping relationship is similar to the foregoing implementation of the first mapping relationship predefined in the protocol. Details are not described again.

Further, after determining the port information of the first CSI-RS, the terminal device may determine, based on the port information of the first CSI-RS, the first CSI-RS that is in a received second CSI-RS and that is related to the terminal device. In this case, as described in step 302 below, the network device sends the second CSI-RS to the terminal device. The second CSI-RS includes a plurality of CSI-RSs that are sent by the network device and that correspond to different terminal devices. The second CSI-RS includes a plurality of CSI-RSs corresponding to a plurality of CSI-RS ports. For example, the second CSI-RS includes a CSI-RS 1 to a CSI-RS 6. The CSI-RS 1 and the CSI-RS 2 correspond to a terminal device 1, the CSI-RS 3 and the CSI-RS 4 correspond to a terminal device 2, and the CSI-RS 5 and the CSI-RS 6 correspond to a terminal device 3. The network device sends the CSI-RS 1 to the CSI-RS 6, and the terminal device 1 to the terminal device 3 each may receive the CSI-RS 1 to the CSI-RS 6. The terminal device 1 determines, based on port information of the CSI-RS 1 and the CSI-RS 2, the CSI-RS 1 and the CSI-RS 2 related to the terminal device 1 in the CSI-RS 1 to the CSI-RS 6. The terminal device 2 determines, based on port information of the CSI-RS 3 and the CSI-RS 4, the CSI-RS 3 and the CSI-RS 4 related to the terminal device 2 in the CSI-RS 1 to the CSI-RS 6. The terminal device 3 determines, based on port information of the CSI-RS 5 and the CSI-RS 6, the CSI-RS 5 and the CSI-RS 6 related to the terminal device 3 in the CSI-RS 1 to the CSI-RS 6. The terminal device 1 may determine, according to the method in the embodiment in FIG. 2, the port information of the CSI-RS 1 and the CSI-RS 2 related to the terminal device 1, the terminal device 2 may determine, according to the method in the embodiment in FIG. 2, the port information of the CSI-RS 3 and the CSI-RS 4 related to the terminal device 2, and the terminal device 3 may determine, according to the method in the embodiment in FIG. 2, the port information of the CSI-RS 5 and the CSI-RS 6 related to the terminal device 3.

The following describes a method for receiving a CSI-RS by a terminal device.

FIG. 3 is a schematic flowchart of a method for sending a CSI-RS according to an embodiment of this application. The embodiment in FIG. 3 may be independently implemented, or may be implemented in combination with the embodiment in FIG. 2. The method includes the following steps.

Step 301: A network device sends a first message to a terminal device. Correspondingly, the terminal device receives the first message.

For example, the first message may be radio resource control (radio resource control, RRC) signaling, medium access control control element (medium access control control element, MAC CE) signaling, or another type of message. This is not limited in this application.

In a first implementation, the first message includes one piece of CSI-RS configuration information, and the CSI-RS configuration information is for configuring one or more CSI-RSs of one or more terminal devices. For example, the first message includes configuration information of a third CSI-RS, the third CSI-RS includes a CSI-RS of one or more terminal devices, and the configuration information of the third CSI-RS includes at least one of the following: a port number of the third CSI-RS, a frequency domain density of the third CSI-RS, a CDM type corresponding to the third CSI-RS, or a time domain/frequency domain position of the third CSI-RS. The port number of the third CSI-RS is M, and M is a positive integer. For example, if the third CSI-RS includes a CSI-RS 1 to a CSI-RS 6, the port number of the third CSI-RS in the configuration information of the third CSI-RS is 6. It may be understood that, the CSI-RS configuration information included in the first message is for configuring a CSI-RS with M ports.

In a second implementation, the first message includes a plurality of pieces of CSI-RS configuration information, and each of the plurality of pieces of CSI-RS configuration information is for configuring a CSI-RS of one or more terminal devices. Different pieces of CSI-RS configuration information are for configuring CSI-RSs of different terminal device groups, where one terminal device group includes one or more terminal devices. For example, the first message indicates K pieces of configuration information, and K is an integer greater than 1. For example, the first message includes three pieces of CSI-RS configuration information, and the three pieces of CSI-RS configuration information include configuration information of a fourth CSI-RS, configuration information of a fifth CSI-RS, and configuration information of a sixth CSI-RS. The fourth CSI-RS includes a CSI-RS of one or more terminal devices, and the configuration information of the fourth CSI-RS includes at least one of the following: a port number of the fourth CSI-RS, a frequency domain density of the fourth CSI-RS, a CDM type corresponding to the fourth CSI-RS, or a time domain/frequency domain position of the fourth CSI-RS. The port number of the fourth CSI-RS is N, and N is a positive integer. For example, if the fourth CSI-RS includes a CSI-RS 1 to a CSI-RS 6, the port number of the fourth CSI-RS in the configuration information of the fourth CSI-RS is 6. The fifth CSI-RS includes a CSI-RS of one or more terminal devices, and the configuration information of the fifth CSI-RS includes at least one of the following: a port number of the fifth CSI-RS, a frequency domain density of the fifth CSI-RS, a CDM type corresponding to the fifth CSI-RS, or a time domain/frequency domain position of the fifth CSI-RS. The port number of the fifth CSI-RS is L. L is a positive integer, and L may be the same as or different from N. For example, if the fifth CSI-RS includes a CSI-RS 1 to a CSI-RS 8, the port number of the CSI-RS in the configuration information of the fifth CSI-RS is 8. An implementation of the configuration information of the sixth CSI-RS is similar to those of the configuration information of the fourth CSI-RS and the configuration information of the fifth CSI-RS. Details are not described again.

Step 302: The network device sends a second CSI-RS to the terminal device. Correspondingly, the terminal device receives the second CSI-RS.

In the step, the network device sends the second CSI-RS to the terminal device based on one or more pieces of CSI-RS configuration information included in the first message. The second CSI-RS is a CSI-RS actually sent by the network device, and the second CSI-RS may include a CSI-RS of one or more terminal devices.

For the first implementation in step 301, the second CSI-RS may be the same as the foregoing third CSI-RS, or the second CSI-RS is a part of the third CSI-RS. For example, if the third CSI-RS includes a CSI-RS 1 to a CSI-RS 8 and the second CSI-RS includes the CSI-RS 1 to the CSI-RS 6, the second CSI-RS is a part of the third CSI-RS. Therefore, the port number of the third CSI-RS configured by the network device may be equal to or greater than the port number of the actually sent second CSI-RS.

For the second implementation in step 301, when the network device sends the plurality of pieces of CSI-RS configuration information to the terminal device, the network device selects one of the plurality of pieces of CSI-RS configuration information. The following uses an example in which the configuration information of the fourth CSI-RS is selected. The second CSI-RS sent by the network device may be the same as the fourth CSI-RS, or the second CSI-RS is a part of the fourth CSI-RS. For example, if the fourth CSI-RS includes a CSI-RS 1 to a CSI-RS 10 and the second CSI-RS includes the CSI-RS 1 to the CSI-RS 6, the second CSI-RS is a part of the third CSI-RS. Therefore, the configured port number of the fourth CSI-RS configured by the network device may be equal to or greater than the port number of the actually sent second CSI-RS. The terminal device may determine, in any one of the following manners, the configuration information of the fourth CSI-RS selected by the network device.

Manner 1: The network device sends third indication information to the terminal device, where the third indication information includes the configuration information of the fourth CSI-RS in the plurality of pieces of CSI-RS configuration information.

For example, the third indication information is included in DCI.

Manner 2: The terminal device determines the configuration information of the fourth CSI-RS in the plurality of pieces of CSI-RS configuration information.

For example, the terminal device determines the configuration information of the fourth CSI-RS in the plurality of pieces of CSI-RS configuration information based on DMRS configuration information. In other words, the configuration information of the fourth CSI-RS is associated with (or corresponds to) the DMRS configuration information. The DMRS configuration information includes at least one of the following information: a DMRS type (DMRS type), a maximum number of DMRS symbols (Max-length), a number of front-loaded DMRS symbols (Number of front-loaded symbols), or a number of DMRS CDM groups (Number of DMRS CDM group(s) without data).

The DMRS configuration information may come from the network device. For example, the network device sends fourth indication information to the terminal device. The fourth indication information includes the DMRS configuration information, the fourth indication information and the first indication information in the embodiment in FIG. 2 jointly indicate the DMRS configuration information, or the first indication information in the embodiment in FIG. 2 further includes the DMRS configuration information. Alternatively, the terminal device determines the DMRS configuration information.

For example, a combination relationship between the DMRS type, the maximum number of DMRS symbols, the number of front-loaded DMRS symbols, and the number of DMRS CDM groups is shown in Table 1. A correspondence between each combination and CSI-RS configuration information may be predefined, and one combination corresponds to one DMRS configuration. For example, when the DMRS type is a type 1, the maximum number of DMRS symbols is equal to 2, the number of front-loaded DMRS symbols is equal to 1, and the number of DMRS CDM groups is equal to 1, the selected CSI-RS configuration information is the configuration information of the fourth CSI-RS in the plurality of pieces of CSI-RS configuration information. When the DMRS type is the type 1, the maximum number of DMRS symbols is equal to 2, the number of front-loaded DMRS symbols is equal to 1, and the number of DMRS CDM groups is equal to 2, the selected CSI-RS configuration information is the configuration information of the fifth CSI-RS in the plurality of pieces of CSI-RS configuration information. The rest may be deduced by analogy. Different combinations may correspond to a same piece of CSI-RS configuration information, or may correspond to different pieces of CSI-RS configuration information.

Table 1

| DMRS type | Maximum number of DMRS symbols | Number of front-loaded DMRS symbols | Number of DMRS CDM groups |
|---|---|---|---|
| Type 1 | 2 | 1 | 1 |
| Type 1 | 2 | 1 | 2 |
| Type 1 | 2 | 2 | 1 |
| Type 1 | 2 | 2 | 2 |
| Type 2 | 2 | 1 | 1 |
| Type 2 | 2 | 1 | 2 |
| Type 2 | 2 | 1 | 3 |
| Type 2 | 2 | 2 | 1 |
| Type 2 | 2 | 2 | 2 |
| Type 2 | 2 | 2 | 3 |
| Type 1 | 1 | / | 1 |
| Type 1 | 1 | / | 2 |
| Type 2 | 1 | / | 1 |
| Type 2 | 1 | / | 2 |
| Type 2 | 1 | / | 3 |
| Enhanced type 1 | 2 | 1 | 1 |
| Enhanced type 1 | 2 | 1 | 2 |
| Enhanced type 1 | 2 | 2 | 1 |
| Enhanced type 1 | 2 | 2 | 2 |
| Enhanced type 2 | 2 | 1 | 1 |

(continued)

| DMRS type | Maximum number of DMRS symbols | Number of front-loaded DMRS symbols | Number of DMRS CDM groups |
|---|---|---|---|
| Enhanced type 2 | 2 | 1 | 2 |
| Enhanced type 2 | 2 | 1 | 3 |
| Enhanced type 2 | 2 | 2 | 1 |
| Enhanced type 2 | 2 | 2 | 2 |
| Enhanced type 2 | 2 | 2 | 3 |
| Enhanced type 1 | 1 | / | 1 |
| Enhanced type 1 | 1 | / | 2 |
| Enhanced type 2 | 1 | / | 1 |
| Enhanced type 2 | 1 | / | 2 |
| Enhanced type 2 | 1 | / | 3 |

For example, the terminal device may also determine a maximum number of DMRS ports based on the DMRS configuration information. The maximum number of DMRS ports may be a maximum number of simultaneously scheduled DMRS ports. Then, the terminal device determines a piece of CSI-RS configuration information in the plurality of pieces of CSI-RS configuration information based on the maximum number of DMRS ports, for example, determines the configuration information of the fourth CSI-RS in the plurality of pieces of CSI-RS configuration information. For example, a combination relationship between the DMRS type, the maximum number of DMRS symbols, the number of front-loaded DMRS symbols, the number of DMRS CDM groups, and the maximum number of DMRS ports is shown in Table 2.

Table 2

| DMRS type | Maximum number of DMRS symbols | Number of front-loaded DMRS symbols | Number of DMRS CDM groups | Maximum number of DMRS ports |
|---|---|---|---|---|
| Type 1 | 2 | 1 | 1 | 2 |
| Type 1 | 2 | 1 | 2 | 4 |
| Type 1 | 2 | 2 | 1 | 4 |
| Type 1 | 2 | 2 | 2 | 8 |
| Type 2 | 2 | 1 | 1 | 2 |
| Type 2 | 2 | 1 | 2 | 4 |
| Type 2 | 2 | 1 | 3 | 6 |
| Type 2 | 2 | 2 | 1 | 4 |
| Type 2 | 2 | 2 | 2 | 8 |
| Type 2 | 2 | 2 | 3 | 12 |
| Type 1 | 1 | / | 1 | 2 |
| Type 1 | 1 | / | 2 | 4 |
| Type 2 | 1 | / | 1 | 2 |
| Type 2 | 1 | / | 2 | 4 |
| Type 2 | 1 | / | 3 | 6 |
| Enhanced type 1 | 2 | 1 | 1 | 4 |
| Enhanced type 1 | 2 | 1 | 2 | 8 |
| Enhanced type 1 | 2 | 2 | 1 | 8 |
| Enhanced type 1 | 2 | 2 | 2 | 16 |

(continued)

| DMRS type | Maximum number of DMRS symbols | Number of front-loaded DMRS symbols | Number of DMRS CDM groups | Maximum number of DMRS ports |
|---|---|---|---|---|
| Enhanced type 2 | 2 | 1 | 1 | 4 |
| Enhanced type 2 | 2 | 1 | 2 | 8 |
| Enhanced type 2 | 2 | 1 | 3 | 12 |
| Enhanced type 2 | 2 | 2 | 1 | 8 |
| Enhanced type 2 | 2 | 2 | 2 | 16 |
| Enhanced type 2 | 2 | 2 | 3 | 24 |
| Enhanced type 1 | 1 | / | 1 | 4 |
| Enhanced type 1 | 1 | / | 2 | 8 |
| Enhanced type 2 | 1 | / | 1 | 4 |
| Enhanced type 2 | 1 | / | 2 | 8 |
| Enhanced type 2 | 1 | / | 3 | 12 |

It may be learned from Table 2 that, a correspondence between the DMRS configuration information and the maximum number of DMRS ports may be: When the maximum number of DMRS symbols is equal to 1, Maximum number of DMRS ports = a*Number of DMRS CDM groups; or when the maximum number of DMRS symbols is equal to 2, the maximum number of DMRS ports = a*Number of DMRS CDM groups*Number of front-loaded DMRS symbols. * represents a multiplication sign, a is related to the DMRS type, and a represents a number of DMRS ports of one CDM group and one symbol. Using Table 2 as an example, when the DMRS type is the type 1 (Type 1) or the type 2 (Type 2), a = 2; or when the DMRS type is the enhanced type 1 (enhanced Type 1) or the enhanced type 2 (enhanced Type 2), a = 4.

Then, a terminal determines the configuration information of the fourth CSI-RS in the plurality of pieces of CSI-RS configuration information based on the maximum number of DMRS ports. A relationship between the configuration information of the fourth CSI-RS that is selected by the terminal device and that is in the plurality of pieces of CSI-RS configuration information and the maximum number of DMRS ports is: The port number of the fourth CSI-RS is a smallest value in a CSI-RS port number set, each CSI-RS port number in the CSI-RS port number set is included in numbers of CSI-RS ports indicated by all of the plurality of pieces of CSI-RS configuration information, and each CSI-RS port number in the CSI-RS port number set is greater than or equal to the maximum number of DMRS ports. For example, the plurality of pieces of CSI-RS configuration information include CSI-RS configuration information 1 to CSI-RS configuration information 4, where a number of CSI-RS ports in the CSI-RS configuration information 1 is 12, a number of CSI-RS ports in the CSI-RS configuration information 2 is 16, a number of CSI-RS ports in the CSI-RS configuration information 3 is 24, and a number of CSI-RS ports in the CSI-RS configuration information 4 is 32. For example, when the maximum number of DMRS ports is 6, the CSI-RS configuration information 1 is selected, and the CSI-RS configuration information 1 is also referred to as the configuration information of the fourth CSI-RS. In this case, the CSI-RS port number set is {12, 16, 24, 32}. For another example, when the maximum number of DMRS ports is 16, the CSI-RS configuration information 2 is selected, and the CSI-RS configuration information 2 is also referred to as the configuration information of the fourth CSI-RS. In this case, the CSI-RS port number set is {16, 24, 32}. For another example, when the maximum number of DMRS ports is 24, the CSI-RS configuration information 3 is selected, and the CSI-RS configuration information 3 is also referred to as the configuration information of the fourth CSI-RS. In this case, the CSI-RS port number set is {24, 32}.

In an implementation, after step 302, the method further includes the following step 303.

Step 303: The terminal device determines a first CSI-RS in the second CSI-RS.

Step 303 is an optional step.

The first CSI-RS determined by the terminal device is a CSI-RS that is in the second CSI-RS and that is related to the terminal device. For example, the terminal device first determines port information of the first CSI-RS related to the terminal device, and then determines the first CSI-RS related to the terminal device in the second CSI-RS based on the port information of the first CSI-RS. The terminal device may determine the port information of the first CSI-RS related to the terminal device by using the method in the embodiment in FIG. 2, or may determine the port information of the first CSI-RS related to the terminal device by using another method. For example, the network device indicates, to the terminal device, the port information of the first CSI-RS related to the terminal device by using DCI.

Further, after determining the port information of the first CSI-RS related to the terminal device, the terminal device may determine uplink precoding based on the port information of the first CSI-RS. The following describes an implementation of determining the uplink precoding.

Step 1: The terminal device sends a sounding reference signal (sounding reference signal, SRS) to the network device.

Step 2: The network device estimates an uplink channel $H_{UL}$ based on the SRS, and obtains a downlink channel $H_{DL}$ based on reciprocity between uplink and downlink.

For example, the network device may estimate the uplink channel $H_{UL}$ of the terminal device based on the SRS from the terminal device.

For example, the network device may alternatively estimate an uplink channel of one or more other terminal devices based on an SRS from the one or more other terminal devices.

Step 3: The network device calculates uplink precoding $P_{UL}$ of the terminal device based on the uplink channel $H_{UL}$ of the terminal, or based on the uplink channel $H_{UL}$ of the terminal and a jointly scheduled uplink channel of another terminal.

Step 4: The network device determines downlink precoding $P_{DL}$, so that a downlink equivalent channel $H_{equ\_DL}$ is equal to the uplink precoding $P_{UL}$, that is, $H_{equ\_DL} = P_{UL} = H_{DL} * P_{DL}$.

$$P_{DL} = H_{DL}^{-1} * P_{UL}.$$

Step 5: The network device performs precoding on a CSI-RS based on $P_{DL}$, to obtain a beamforming CSI-RS (Beamforming CSI-RS, BF CSI-RS).

If $S_{BF-CSI-RS}$ is used to represent a signal of the BF CSI-RS, $S_{SF-CSI-RS} = P_{DL} * S_{CSI-RS}$.

Step 6: The network device sends the BF CSI-RS to the terminal device, and the terminal device receives a first signal Y.

$Y = H_{DL} * P_{DL} * S_{CSI-RS} + n = H_{equ\_DL} * S_{CSI-RS} + n$. $n$ is received noise.

Step 7: The terminal device determines $S_{CSI-RS}$ based on CSI-RS port information related to the terminal device, and estimates the equivalent channel $H_{equ\_DL}$ based on $S_{CSI-RS}$ and the received signal Y.

The terminal device may determine the CSI-RS port information related to the terminal device according to the method in the embodiment in FIG. 2.

Step 8: The terminal device determines the uplink precoding $P_{UL}$, that is, $P_{UL} = H_{equ\_DL}$, based on $H_{equ\_DL}$.

The foregoing solution is a high-precision precoding indication solution for an uplink subband or wideband based on a BF CSI-RS, and can improve accuracy of uplink precoding. In addition, because the CSI-RS port information is indicated to the terminal device without using DCI, but the terminal device determines the CSI-RS port information based on DMRS port information, signaling overheads can be reduced.

It should be noted that, there may alternatively be another solution for the high-precision precoding indication solution for the uplink sub-band based on the BF CSI-RS. For example, a base station sends the BF CSI-RS, where a transmitted precoding matrix indicator (transmitted precoding matrix indicator, TPMI) in DCI indicates codebook-based uplink precoding information; and the terminal device calculates the uplink precoding based on the BF CSI-RS and the TPMI in the DCI.

It may be understood that, to implement the functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

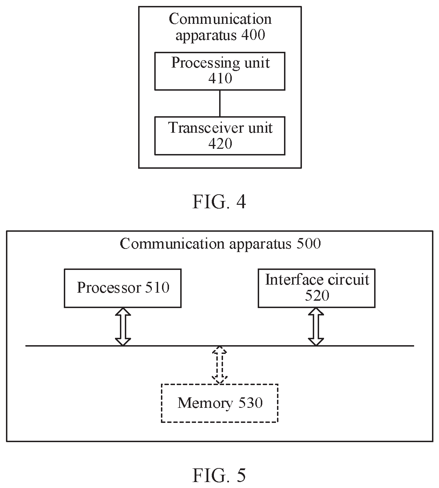

FIG. 4 and FIG. 5 each is a diagram of a possible structure of a communication apparatus according to an embodiment of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be the terminal device or the network device, or may be a module (for example, a chip) used in the terminal device or the network device.

A communication apparatus 400 shown in FIG. 4 includes a processing unit 410 and a transceiver unit 420. The communication apparatus 400 is configured to implement the function of the terminal device or the network device in the foregoing method embodiments.

When the communication apparatus 400 is configured to implement the function of the terminal device in the foregoing method embodiments, the transceiver unit 420 is configured to receive first indication information, where the first indication information includes port information of a first DMRS; and the processing unit 410 is configured to determine the port information of the first CSI-RS based on the first indication information.

In a possible implementation, the first indication information includes a port index of the first DMRS, and the port information of the first CSI-RS includes a port index of the first CSI-RS.

In a possible implementation, the port index of the first CSI-RS is the same as the port index of the first DMRS.

In a possible implementation, that the processing unit 410 is configured to determine the port information of the first CSI-RS based on the first indication information specifically includes: determining the port information of the first CSI-RS corresponding to the first indication information based on the first indication information and a first mapping relationship predefined in a protocol, where the first mapping relationship includes a mapping relationship between DMRS port information and CSI-RS port information.

In a possible implementation, the transceiver unit 420 is further configured to receive second indication information, where the second indication information includes a second mapping relationship between the first indication information and the port information of the first CSI-RS; and that the processing unit 410 is configured to determine the port information of the first CSI-RS based on the first indication information specifically includes: determining the port information of the first CSI-RS based on the first indication information and the second mapping relationship.

In a possible implementation, the transceiver unit 420 is further configured to receive a second CSI-RS; and the processing unit 410 is further configured to determine the first CSI-RS in the second CSI-RS based on the first indication information.

In a possible implementation, the transceiver unit 420 is further configured to receive a first message, where the first message includes configuration information of a third CSI-RS, and the second CSI-RS is a part of the third CSI-RS.

In a possible implementation, the transceiver unit 420 is further configured to receive a first message, where the first message includes a plurality of pieces of configuration information; and that the transceiver unit 420 is configured to receive the second CSI-RS specifically includes: receiving the second CSI-RS based on configuration information of a fourth CSI-RS in the plurality of pieces of configuration information, where the second CSI-RS is a part of the fourth CSI-RS.

In a possible implementation, the transceiver unit 420 is further configured to receive third indication information, where the third indication information includes the configuration information of the fourth CSI-RS in the plurality of pieces of CSI-RS configuration information.

In a possible implementation, the processing unit 410 is further configured to determine the configuration information of the fourth CSI-RS based on DMRS configuration information, where the configuration information of the fourth CSI-RS is associated with the DMRS configuration information, and the DMRS configuration information includes at least one of the following information: a DMRS type, a maximum number of DMRS symbols, a number of front-loaded DMRS symbols, or a number of DMRS CDM groups.

In a possible implementation, that the processing unit 410 is configured to determine the configuration information of the fourth CSI-RS based on the DMRS configuration information specifically includes: determining a maximum number of DMRS ports based on the DMRS configuration information; and determining the configuration information of the fourth CSI-RS based on the maximum number of DMRS ports, where a port number of the fourth CSI-RS is a smallest value in a CSI-RS port number set, each CSI-RS port number in the CSI-RS port number set is included in numbers of CSI-RS ports indicated by all of the plurality of pieces of CSI-RS configuration information, and each CSI-RS port number in the CSI-RS port number set is greater than or equal to the maximum number of DMRS ports.

In a possible implementation, the maximum number of DMRS symbols is equal to 1, and the maximum number of DMRS ports is equal to a product of a and the number of DMRS CDM groups; or the maximum number of DMRS symbols is equal to 2, and the maximum number of DMRS ports is equal to a product of a, the number of DMRS CDM groups, and the number of front-loaded DMRS symbols, where a is related to the DMRS type.

In a possible implementation, the DMRS type is a type 1 or a type 2, and a is equal to 2; or the DMRS type is an enhanced type 1 or an enhanced type 2, and a is equal to 4.

In a possible implementation, the transceiver unit 420 is further configured to receive fourth indication information, where the fourth indication information includes the DMRS configuration information, or the first indication information and the fourth indication information indicate the DMRS configuration information.

In a possible implementation, the plurality of pieces of CSI-RS configuration information further include configuration information of a fifth CSI-RS, and a port number of the fifth CSI-RS is different from the port number of the fourth CSI-RS.

In a possible implementation, the processing unit 410 is further configured to determine uplink precoding based on the port information of the first CSI-RS.

When the communication apparatus 400 is configured to implement the function of the terminal device in the foregoing method embodiments, the transceiver unit 420 is configured to receive a first message, where the first message includes configuration information of a third CSI-RS; and receive a second CSI-RS, where the second CSI-RS is a part of the third CSI-RS.

When the communication apparatus 400 is configured to implement the function of the terminal device in the foregoing method embodiments, the transceiver unit 420 is configured to receive a first message, where the first message includes a plurality of pieces of CSI-RS configuration information; and receive a second CSI-RS based on configuration information of a fourth CSI-RS in the plurality of pieces of CSI-RS configuration information, where the second CSI-RS is a part of the fourth CSI-RS.

In a possible implementation, the transceiver unit 420 is further configured to receive third indication information, where the third indication information includes the configuration information of the fourth CSI-RS in the plurality of pieces of CSI-RS configuration information.

In a possible implementation, the transceiver unit 420 is further configured to receive fourth indication information, where the fourth indication information includes DMRS configuration information, or the fourth indication information and the first indication information indicate the DMRS configuration information; the DMRS configuration information is associated with the configuration information of the fourth CSI-RS; and the DMRS configuration information includes at least one of the following information: a DMRS type, a maximum number of DMRS symbols, a number of front-loaded DMRS symbols, or a number of DMRS CDM groups.

When the communication apparatus 400 is configured to implement the function of the network device in the foregoing method embodiments, the processing unit 410 is configured to determine first indication information, where the first indication information includes port information of a first DMRS, and the port information of the first DMRS is for determining port information of a first CSI-RS; and the transceiver unit 420 is configured to send the first indication information.

In a possible implementation, the first indication information includes a port index of the first DMRS, and the port information of the first CSI-RS includes a port index of the first CSI-RS.

In a possible implementation, the port index of the first CSI-RS is the same as the port index of the first DMRS.

In a possible implementation, a first mapping relationship between DMRS port information and CSI-RS port information is predefined in a protocol.

In a possible implementation, the transceiver unit 420 is further configured to send second indication information, where the second indication information includes a second mapping relationship between the first indication information and the port information of the first CSI-RS.

In a possible implementation, the transceiver unit 420 is further configured to send a first message, where the first message includes configuration information of a third CSI-RS; and send a second CSI-RS, where the second CSI-RS is a part of the third CSI-RS, and the second CSI-RS includes the first CSI-RS.

In a possible implementation, the transceiver unit 420 is further configured to send a first message, where the first message includes a plurality of pieces of CSI-RS configuration information; send third indication information, where the third indication information includes configuration information of a fourth CSI-RS in the plurality of pieces of CSI-RS configuration information; and send a second CSI-RS, where the second CSI-RS is a part of the fourth CSI-RS.

In a possible implementation, the transceiver unit 420 is further configured to send a first message, where the first message includes a plurality of pieces of CSI-RS configuration information; send fourth indication information, where the fourth indication information includes DMRS configuration information, or the first indication information and the fourth indication information indicate the DMRS configuration information; the DMRS configuration information is associated with configuration information of a fourth CSI-RS in the plurality of pieces of CSI-RS configuration information; and the DMRS configuration information includes at least one of the following information: a DMRS type, a maximum number of DMRS symbols, a number of front-loaded DMRS symbols, or a number of DMRS CDM groups; and send a second CSI-RS, where the second CSI-RS is a part of the fourth CSI-RS.

In a possible implementation, a port number of the fourth CSI-RS is a smallest value in a CSI-RS port number set, each CSI-RS port number in the CSI-RS port number set is included in numbers of CSI-RS ports indicated by all of the plurality of pieces of CSI-RS configuration information, each CSI-RS port number in the CSI-RS port number set is greater than or equal to a maximum number of DMRS ports, and the maximum number of DMRS ports is associated with the DMRS configuration information.

In a possible implementation, the maximum number of DMRS symbols is equal to 1, and the maximum number of DMRS ports is equal to a product of a and the number of DMRS CDM groups; or the maximum number of DMRS symbols is equal to 2, and the maximum number of DMRS ports is equal to a product of a, the number of DMRS CDM groups, and the number of front-loaded DMRS symbols, where a is related to the DMRS type.

In a possible implementation, the DMRS type is a type 1 or a type 2, and a is equal to 2; or the DMRS type is an enhanced type 1 or an enhanced type 2, and a is equal to 4.

In a possible implementation, the plurality of pieces of CSI-RS configuration information further include configuration information of a fifth CSI-RS, and a port number of the fifth CSI-RS is different from the port number of the fourth CSI-RS.

When the communication apparatus 400 is configured to implement the function of the network device in the foregoing method embodiments, the transceiver unit 420 is configured to send a first message, where the first message includes configuration information of a third CSI-RS; and send a second CSI-RS, where the second CSI-RS is a part of the third CSI-RS.

When the communication apparatus 400 is configured to implement the function of the network device in the foregoing method embodiments, the transceiver unit 420 is configured to send a first message, where the first message includes a plurality of pieces of CSI-RS configuration information; send third indication information, where the third indication information includes configuration information of a fourth CSI-RS in the plurality of pieces of CSI-RS configuration information; and send a second CSI-RS, where the second CSI-RS is a part of the fourth CSI-RS.

When the communication apparatus 400 is configured to implement the function of the network device in the foregoing method embodiments, the transceiver unit 420 is configured to send a first message, where the first message includes a plurality of pieces of CSI-RS configuration information; send fourth indication information, where the fourth indication information includes DMRS configuration information, the DMRS configuration information is associated with configuration information of a fourth CSI-RS in the plurality of pieces of CSI-RS configuration information, and the DMRS configuration information includes at least one of the following information: a DMRS type, a maximum number of DMRS symbols, a number of front-loaded DMRS symbols, or a number of DMRS CDM groups; and send a second CSI-RS, where the second CSI-RS is a part of the fourth CSI-RS.

For more detailed descriptions about the foregoing processing unit 410 and transceiver unit 420, directly refer to the related descriptions in the foregoing method embodiments. Details are not described herein again.

A communication apparatus 500 shown in FIG. 5 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required by the processor 510 to run the instructions, or store data generated after the processor 510 runs the instructions.

When the communication apparatus 500 is configured to implement the foregoing method embodiments, the processor 510 is configured to implement a function of the foregoing processing unit 410, and the interface circuit 520 is configured to implement a function of the foregoing transceiver unit 420.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the terminal device or the network device. Certainly, the processor and the storage medium may also exist in an access network device or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. The computer program (English: Computer Program) is a set of instructions that indicate each step of an electronic computer or another device having a message processing capability, is usually written in a program design language, and is run in a target system structure. When the computer programs or instructions are loaded and executed on a computer, procedures or functions in embodiments of this application are all or partially executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" represents an "or" relationship between the associated objects. In a formula in this application, the character "/" represents a "division" relationship between the associated objects.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A method for indicating a reference signal, comprising:

   receiving first indication information, wherein the first indication information comprises port information of a first demodulation reference signal DMRS; and
   determining port information of a first channel state information reference signal CSI-RS based on the first indication information.

2. The method according to claim 1, wherein the first indication information comprises a port index of the first DMRS, and the port information of the first CSI-RS comprises a port index of the first CSI-RS.

3. The method according to claim 2, wherein the port index of the first CSI-RS is the same as the port index of the first DMRS.

4. The method according to any one of claims 1 to 3, wherein the determining the port information of the first CSI-RS based on the first indication information comprises:

   determining the port information of the first CSI-RS based on the first indication information and a first mapping relationship predefined in a protocol, wherein
   the first mapping relationship comprises a mapping relationship between DMRS port information and CSI-RS port information, the DMRS port information comprises the port information of the first DMRS, and the CSI-RS port information comprises the port information of the first CSI-RS.

5. The method according to any one of claims 1 to 3, wherein the method further comprises:

   receiving second indication information, wherein the second indication information comprises a second mapping relationship between the first indication information and the port information of the first CSI-RS; and
   the determining the port information of the first CSI-RS based on the first indication information comprises: determining the port information of the first CSI-RS based on the first indication information and the second mapping relationship.

6. The method according to any one of claims 1 to 5, wherein the method further comprises:

   receiving a second CSI-RS; and
   determining the first CSI-RS in the second CSI-RS based on the first indication information.

7. The method according to claim 6, wherein the method further comprises:
   receiving a first message, wherein the first message comprises configuration information of a third CSI-RS, and the second CSI-RS is a part of the third CSI-RS.

8. The method according to claim 6, wherein the method further comprises:

   receiving a first message, wherein the first message comprises a plurality of pieces of CSI-RS configuration information; and

the receiving the second CSI-RS comprises:

receiving the second CSI-RS based on configuration information of a fourth CSI-RS in the plurality of pieces of CSI-RS configuration information, wherein
the second CSI-RS is a part of the fourth CSI-RS.

9. The method according to claim 8, wherein the method further comprises:
receiving third indication information, wherein the third indication information comprises the configuration information of the fourth CSI-RS in the plurality of pieces of CSI-RS configuration information.

10. The method according to claim 8, wherein the method further comprises:

determining the configuration information of the fourth CSI-RS based on DMRS configuration information, wherein
the configuration information of the fourth CSI-RS is associated with the DMRS configuration information, and the DMRS configuration information comprises at least one of the following information: a DMRS type, a maximum number of DMRS symbols, a quantity of front-loaded DMRS symbols, or a number of DMRS CDM groups.

11. The method according to claim 10, wherein the determining the configuration information of the fourth CSI-RS based on the DMRS configuration information comprises:

determining a maximum number of DMRS ports based on the DMRS configuration information; and
determining the configuration information of the fourth CSI-RS based on the maximum number of DMRS ports, wherein
a port number of the fourth CSI-RS is a smallest value in a CSI-RS port number set, each CSI-RS port number in the CSI-RS port number set is comprised in numbers of CSI-RS ports indicated by all of the plurality of pieces of CSI-RS configuration information, and each CSI-RS port number in the CSI-RS port number set is greater than or equal to the maximum number of DMRS ports.

12. The method according to claim 11, wherein the maximum number of DMRS symbols is equal to 1, and the maximum number of DMRS ports is equal to a product of a and the number of DMRS CDM groups; or the maximum number of DMRS symbols is equal to 2, and the maximum number of DMRS ports is equal to a product of a, the number of DMRS CDM groups, and the number of front-loaded DMRS symbols, wherein a is related to the DMRS type.

13. The method according to claim 12, wherein the DMRS type is a type 1 or a type 2, and a is equal to 2; or the DMRS type is an enhanced type 1 or an enhanced type 2, and a is equal to 4.

14. The method according to any one of claims 9 to 13, wherein the method further comprises:
receiving fourth indication information, wherein the fourth indication information comprises the DMRS configuration information, or the first indication information and the fourth indication information indicate the DMRS configuration information.

15. The method according to any one of claims 8 to 14, wherein the plurality of pieces of CSI-RS configuration information further comprise configuration information of a fifth CSI-RS, and a port number of the fifth CSI-RS is different from the port number of the fourth CSI-RS.

16. The method according to any one of claims 1 to 15, wherein the method further comprises:
determining uplink precoding based on the port information of the first CSI-RS.

17. A method for indicating a reference signal, comprising:

determining first indication information, wherein the first indication information comprises port information of a first demodulation reference signal DMRS, and the port information of the first DMRS is for determining port information of a first channel state information reference signal CSI-RS; and
sending the first indication information.

18. The method according to claim 17, wherein the first indication information comprises a port index of the first DMRS, and the port information of the first CSI-RS comprises a port index of the first CSI-RS.

19. The method according to claim 18, wherein the port index of the first CSI-RS is the same as the port index of the first DMRS.

20. The method according to any one of claims 17 to 19, wherein a first mapping relationship between DMRS port information and CSI-RS port information is predefined in a protocol, wherein the DMRS port information comprises the port information of the first DMRS, and the CSI-RS port information comprises the port information of the first CSI-RS.

21. The method according to any one of claims 17 to 19, wherein the method further comprises:
sending second indication information, wherein the second indication information comprises a second mapping relationship between the first indication information and the port information of the first CSI-RS.

22. The method according to any one of claims 17 to 21, wherein the method further comprises:

sending a first message, wherein the first message comprises configuration information of a third CSI-RS; and
sending a second CSI-RS, wherein the second CSI-RS is a part of the third CSI-RS, and the second CSI-RS comprises the first CSI-RS.

23. The method according to any one of claims 17 to 21, wherein the method further comprises:

sending a first message, wherein the first message comprises a plurality of pieces of CSI-RS configuration information;
sending third indication information, wherein the third indication information comprises configuration information of a fourth CSI-RS in the plurality of pieces of CSI-RS configuration information; and
sending a second CSI-RS, wherein the second CSI-RS is a part of the fourth CSI-RS.

24. The method according to any one of claims 17 to 21, wherein the method further comprises:

sending a first message, wherein the first message comprises a plurality of pieces of CSI-RS configuration information;
sending fourth indication information, wherein the fourth indication information comprises DMRS configuration information, or the fourth indication information and the first indication information indicate the DMRS configuration information; the DMRS configuration information is associated with configuration information of a fourth CSI-RS in the plurality of pieces of CSI-RS configuration information; and the DMRS configuration information comprises at least one of the following information: a DMRS type, a maximum number of DMRS symbols, a number of front-loaded DMRS symbols, or a number of DMRS CDM groups; and
sending a second CSI-RS, wherein the second CSI-RS is a part of the fourth CSI-RS.

25. The method according to claim 24, wherein a port number of the fourth CSI-RS is a smallest value in a CSI-RS port number set, each CSI-RS port number in the CSI-RS port number set is comprised in numbers of CSI-RS ports indicated by all of the plurality of pieces of CSI-RS configuration information, each CSI-RS port number in the CSI-RS port number set is greater than or equal to a maximum number of DMRS ports, and the maximum number of DMRS ports is associated with the DMRS configuration information.

26. The method according to claim 25, wherein the maximum number of DMRS symbols is equal to 1, and the maximum number of DMRS ports is equal to a product of a and the number of DMRS CDM groups; or

the maximum number of DMRS symbols is equal to 2, and the maximum number of DMRS ports is equal to a product of a, the number of DMRS CDM groups, and the number of front-loaded DMRS symbols, wherein a is related to the DMRS type.

27. The method according to claim 26, wherein the DMRS type is a type 1 or a type 2, and a is equal to 2; or
the DMRS type is an enhanced type 1 or an enhanced type 2, and a is equal to 4.

28. The method according to any one of claims 23 to 27, wherein the plurality of pieces of CSI-RS configuration information further comprise configuration information of a fifth CSI-RS, and a port number of the fifth CSI-RS is different from the port number of the fourth CSI-RS.

29. A method for indicating a reference signal, comprising:

receiving a first message, wherein the first message comprises configuration information of a third CSI-RS; and receiving a second CSI-RS, wherein the second CSI-RS is a part of the third CSI-RS.

30. A method for indicating a reference signal, comprising:

receiving a first message, wherein the first message comprises a plurality of pieces of CSI-RS configuration information; and
receiving a second CSI-RS based on configuration information of a fourth CSI-RS in the plurality of pieces of CSI-RS configuration information, wherein the second CSI-RS is a part of the fourth CSI-RS.

31. The method according to claim 30, further comprising:
receiving third indication information, wherein the third indication information comprises the configuration information of the fourth CSI-RS in the plurality of pieces of CSI-RS configuration information.

32. The method according to claim 30 or 31, further comprising:
receiving fourth indication information, wherein the fourth indication information comprises DMRS configuration information, or the fourth indication information and the first indication information indicate the DMRS configuration information; the DMRS configuration information is associated with the configuration information of the fourth CSI-RS; and the DMRS configuration information comprises at least one of the following information: a DMRS type, a maximum number of DMRS symbols, a number of front-loaded DMRS symbols, or a number of DMRS CDM groups.

33. A communication apparatus, comprising a module configured to perform the method according to any one of claims 1 to 16, the method according to any one of claims 17 to 28, the method according to claim 29, or the method according to any one of claims 30 to 32.

34. A communication apparatus, comprising a processor, wherein the processor is configured to invoke a program to perform the method according to any one of claims 1 to 16, perform the method according to any one of claims 17 to 28, perform the method according to claim 29, or perform the method according to any one of claims 30 to 32.

35. A communication apparatus, comprising a processor, wherein when the communication apparatus runs, the processor executes computer instructions to perform the method according to any one of claims 1 to 16, perform the method according to any one of claims 17 to 28, perform the method according to claim 29, or perform the method according to any one of claims 30 to 32.

36. A communication apparatus, comprising a processor and an interface circuit, wherein the processor is configured to communicate with another apparatus through the interface circuit, and perform the method according to any one of claims 1 to 16, perform the method according to any one of claims 17 to 28, perform the method according to claim 29, or perform the method according to any one of claims 30 to 32.

37. A computer-readable storage medium, wherein the storage medium stores a computer program or instructions, and the computer program or instructions, when executed by a communication apparatus, implement the method according to any one of claims 1 to 16, the method according to any one of claims 17 to 28, the method according to claim 29, or the method according to any one of claims 30 to 32.

38. A computer program product, wherein the computer program product comprises a computer program or instructions, and when the computer program or instructions are run, the method according to any one of claims 1 to 16, the method according to any one of claims 17 to 28, the method according to claim 29, or the method according to any one of claims 30 to 32 is implemented.

39. A communication system, comprising a terminal device configured to perform the method according to any one of claims 1 to 16, and a network device configured to perform the method according to any one of claims 17 to 28.

40. A communication system, comprising a terminal device configured to perform the method according to claim 29 and a network device, wherein the network device is configured to send a first message to the terminal device, wherein the first message comprises configuration information of a third CSI-RS; and send a second CSI-RS to the terminal device, wherein the second CSI-RS is a part of the third CSI-RS.

41. A communication system, comprising a terminal device configured to perform the method according to any one of claims 30 to 32 and a network device, wherein the network device is configured to send a message to the terminal device, wherein the first message comprises a plurality of pieces of CSI-RS configuration information, and the plurality of pieces of CSI-RS configuration information comprise configuration information of a fourth CSI-RS; and send a second CSI-RS to the terminal device, wherein the second CSI-RS is a part of the fourth CSI-RS.

FIG. 1(a)

FIG. 1(b)

Terminal
device

Network
device

201: Determine first
indication information,
where the first
indication information
includes port
information of a first
DMRS

202: First indication information

203: Determine
port information
of a first CSI-RS
based on the first
indication
information

FIG. 2

Terminal
device

Network
device

301: First message

302: Second CSI-RS

303:
Determine a
first CSI-RS
in the second
CSI-RS

FIG. 3

Communication
apparatus 400

Processing unit
410

Transceiver unit
420

FIG. 4

Communication apparatus 500

Processor 510

Interface circuit
520

Memory 530

FIG. 5

**INTERNATIONAL SEARCH REPORT**

| International application No. |
|---|
| **PCT/CN2024/110443** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, VEN, WPABS, WPABSC: 参考信号, 端口, 索引, 关联, 映射, 指示, reference signal, port, index, map+, DMRS, CSI-RS, indicat+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022116053 A1 (HUAWEI TECHNOLOGIES CO., LTD.) 09 June 2022 (2022-06-09) description, pages 1-6 and 13-19, and figure 6 | 1-41 |
| A | CN 114557099 A (LG ELECTRONICS, INC.) 27 May 2022 (2022-05-27) entire document | 1-41 |
| A | US 2021184817 A1 (AT&T INTELLECTUAL PROPERTY I, L.P.) 17 June 2021 (2021-06-17) entire document | 1-41 |
| A | WO 2018082077 A1 (HUAWEI TECHNOLOGIES CO., LTD.) 11 May 2018 (2018-05-11) entire document | 1-41 |
| A | WO 2022041288 A1 (HUAWEI TECHNOLOGIES CO., LTD.) 03 March 2022 (2022-03-03) entire document | 1-41 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 November 2024** | **11 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/110443**

| Patent document cited in search report | | | Publication date (day/month/year) | Patent family member(s) | | | Publication date (day/month/year) |
|---|---|---|---|---|---|---|---|
| WO | 2022116053 | A1 | 09 June 2022 | CN | 116584059 | A | 11 August 2023 |
| CN | 114557099 | A | 27 May 2022 | US | 2022210804 | A1 | 30 June 2022 |
| | | | | KR | 20230005104 | A | 09 January 2023 |
| | | | | WO | 2021221363 | A1 | 04 November 2021 |
| | | | | EP | 4020861 | A1 | 29 June 2022 |
| US | 2021184817 | A1 | 17 June 2021 | US | 2022278811 | A1 | 01 September 2022 |
| WO | 2018082077 | A1 | 11 May 2018 | | None | | |
| WO | 2022041288 | A1 | 03 March 2022 | US | 2023224127 | A1 | 13 July 2023 |
| | | | | EP | 4207896 | A1 | 05 July 2023 |
| | | | | CN | 115989705 | A | 18 April 2023 |

Form PCT/ISA/210 (patent family annex) (July 2022)

**EP 4 749 968 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311036741